# EUROPEAN PATENT SPECIFICATION

(11) **EP 1 525 788 B1**
(45) Date of publication and mention of the grant of the patent: **23.05.2007**
(21) Application number: 04380176.0
(22) Date of filing: 30.08.2004
(51) Int. Cl.: A01G 9/24, A01G 9/26, F24F 7/013

(54) **System for the driving of mechanical elements**
System für den Antrieb mechanischer Elemente
Système pour entraînement d'élements mécaniques

(30) Priority: 22.10.2003 ES 200302457
(43) Date of publication of application: 27.04.2005
(73) Proprietor: Moreno Orduna, Carlos, 50008 Zaragoza (ES)
(72) Inventor: Moreno Orduna, Carlos, 50008 Zaragoza (ES)
(74) Representative: Ungria Lopez, Javier

(56) References cited:
- EP-A- 0 976 320
- DE-A1- 3 942 865
- PATENT ABSTRACTS OF JAPAN vol. 1999, no. 14, 22 December 1999 (1999-12-22) & JP 11 253058 A (HIRANO KINZOKU KK), 21 September 1999 (1999-09-21)

## Description

### OBJECT OF THE INVENTION

As stated in the title of this specification, the following invention refers to a system for driving mechanical elements, being preferably destined for installation in greenhouses, farms and similar, with the aim of being able to graduate their internal ventilation automatically on the basis of the external climatic conditions, in such a way that, as it controls the functioning of reducer motors, they will be able to drive the mechanical elements associated with them in accordance with a series of programmed parameters.

To achieve this, the reducer motor comprises a compact unit comprising a direct current motor, a reducer and an electrical energy accumulator, being governed by a control card, having at least one outlet shaft, and it likewise presents at least one external connection cable, being optionally able to have other control elements such as might be those relating to the ambient conditions.

### FIELD OF APPLICATION

The present specification describes a system for driving mechanical elements, which is of special application for installation in greenhouses, farms and similar, for controlling mobile ventilation elements, as a function of the ambient conditions.

### BACKGROUND TO THE INVENTION

Conventionally, and focusing ourselves on installations such as greenhouses or farms, the control of windows used to be done manually, which represented a serious drawback since, depending on the ambient conditions, one had to be on the alert in order to control the windows, in other words, to keep them open to a greater or lesser degree, or close them, necessarily having to be on the lookout for this and sending a person to perform that operation.

With the passing of time, the control of windows for enclosed spaces, such as greenhouses and farms, in order to regulate the internal temperature by opening or closing them as appropriate, came to be performed by means of reducer motors, the great majority of which existing on the market have a mechanical drive.

Moreover, all those reducer motors consist of alternating current electric motors, without any possibility of being driven when the mains voltage for the installation (greenhouse, farm or similar) does not exist or in the event of a power cut occurring.

In the case of greenhouses whose ventilation is produced via the upper part, one of the elements to be borne very much in mind is the direction and speed of the wind since, due to such greenhouses presenting large open extensions, along at least one of their sides, this can present serious problems, which means that great care has to be taken over the control.

A system for driving mechanical elements in a greenhouse is known from EP-A-0976320.

### DESCRIPTION OF THE INVENTION

The present specification describes a system for driving mechanical elements as defined by the features of the preamble of claim 1, being preferably destined for installation in greenhouses, farms and similar, with the aim of being able to graduate their internal ventilation automatically on the basis of the ambient conditions, in such a way that a self-governed reducer motor comprises a compact unit comprising a direct current motor, a mechanical reducer and an electrical energy accumulator, being governed by an electronic control circuit, which is of course also included in that compact unit, having at least one outlet shaft, and it likewise presents at least one external connection cable.

The direct current electric motor will be suited in terms of speed and torque to the necessary characteristics for driving the mechanical elements connected to the possible outlet shafts.

The electrical energy accumulator consists of one or several batteries capable of providing autonomously, and without the need for any kind of external electrical energy, a mechanical movement at the outlet from the self-governed reducer motor.

In this way, the self-governed reducer motor consists of a unitary whole which can be installed in any place since it does not need an external electrical supply.

Moreover, the electronic control circuit, as well as controlling the elements contained in the self-governed reducer motor unit, can optionally be provided with other control elements relating to the ambient conditions.

So, the electronic control circuit will control the charge of the energy accumulator, it will permit manual operation of the electric motor by incorporating preferably two push-buttons, it will limit any hazardous discharge of the energy accumulator, it will brake the electric motor when it is stopped, preventing rotary movement of the outlet shaft, it will limit the maximum and minimum drive stops for the electric motor, and it will likewise be able to gather data relating to the environment, such as temperature, wind speed, relative humidity, etc.

In order to complete the description and with the aim of aiding a better understanding of the features of the invention, the present specification is accompanied by a set of plans, whose figures represent, in a manner that is illustrative and not limiting, the most characteristic details of the invention.

### BRIEF DESCRIPTION OF THE FIGURES

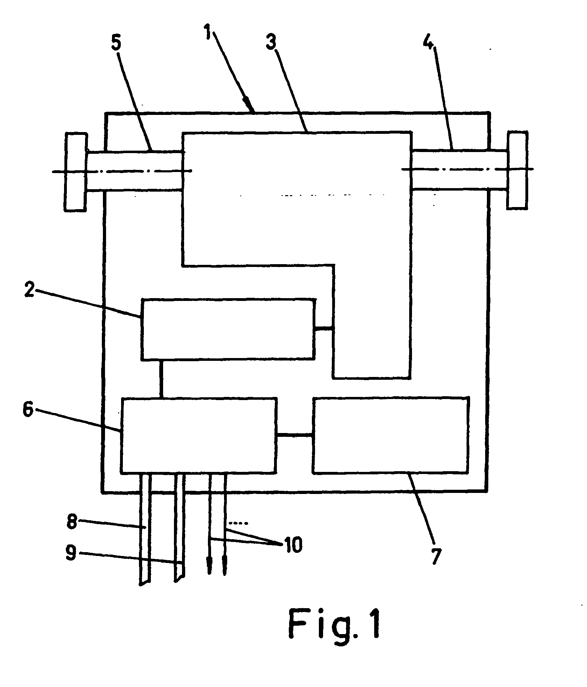

Figure 1. Shows a front view of the self-governed reducer motor which includes a compact unit consisting of a direct current motor, a reducer and an electrical energy accumulator, being governed by a control card and provided with two outlet shafts.
Figure 2. Shows a plan view of a practical execution of the invention in which an array of reducer motors is connected in series and controlled by an electronic control circuit.

### DESCRIPTION OF A PREFERRED EMBODIMENT

Looking at the stated figures and in accordance with the numbering adopted, we can see how the self-governed reducer motor 1 comprises a compact unit comprising a direct current motor 2, a reducer 3 and an electrical energy accumulator 7, which will preferably comprise a pair of batteries, being governed by an electronic control circuit 6, and likewise being provided with two outlet shafts 4 and 5.

Moreover, the self-governed reducer motor 1 similarly presents at least one external connector cable though, in a preferred embodiment of the invention, the self-governed reducer motor 1 will present two external connection cables 8 and 9, permitting a plurality of self-governed reducer motors 1 to be connected in series, or be connected to a control box 14 or to other components, as might be supply to systems or to other sensors.

So, the direct current electric motor 2 is in charge of transmitting movement to the inlet of the mechanical reducer 3, in such a way that the direction of rotation, for closing or opening, will be determined by the electronic control circuit 6.

The energy necessary for the functioning of the integrated self-governed reducer motor unit 1 is provided by the energy accumulator 7 which will preferably consist of one or several batteries depending on the characteristics of the electric motor 2 and on the autonomy which the self-governed reducer motor 1 needs to be endowed with.

The outlet from the mechanical reducer 3 is transmitted with less speed but with an increase in torque to the first outlet shaft 4 and if the application so requires, it will also be transmitted integrally to the second outlet shaft 5.

The electronic control circuit 6 is in charge of governing and supervising all the operations of movement of the self-governed reducer motor 1, being in charge of the following functions:
recharging the energy accumulator 7, so that it controls the recharging of the elements included in the accumulator, protecting them both from an excessive charge and from a very sudden discharge;
electronic brake for the motor, so that when it is stopped it will remain in the completely static position independently of the torque which the outlet shaft has to withstand;
manual control so that the electronic control circuit 6 incorporates some push-buttons, preferably two, in order to permit the motor to be operated in one direction or the other.

The self-governed reducer motor 1 can incorporate a series of ambient control sensors 10.

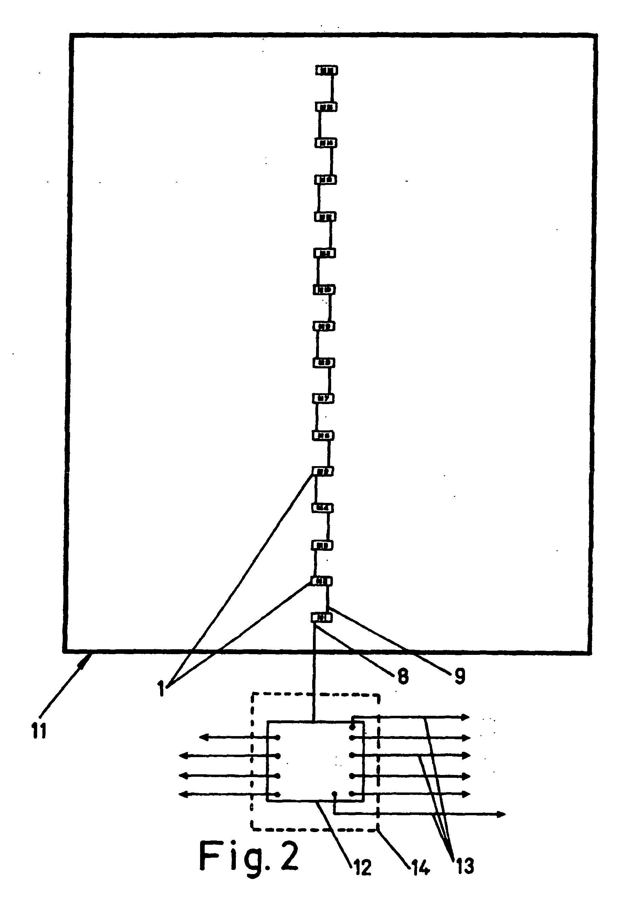

Also, in accordance with figure 2 of the designs, we can see how the self-governed reducer motor 1 can be connected in parallel with other self-governed reducer motors 1, with one of them in turn being linked to a central box 14 provided with an electronic control circuit 12, by means of which all the self-governed reducer motors 1 will be able to be controlled, and whose electronic control circuit 12 will present a series of sensors 13 for ambient control and, depending on it, it will act on the corresponding self-governed reducer motors 1 sending the appropriate orders to them.

Moreover, the central box 14 will be able to be provided with the corresponding electricity supply which will permit charging of the accumulators and an adequate autonomy for them, in line with needs, in the event of power cuts.

Likewise, the central box 14 will be able to be supplied from one or several batteries.

## Claims

1. SYSTEM FOR THE DRIVING OF MECHANICAL ELEMENTS, being preferably destined for installation in greenhouses, farms and similar, with the aim of being able to graduate their internal ventilation automatically on the basis of the ambient conditions, that comprises a plurality of self-governed reducer motors (1), each self-governed reducer motor (1) comprising a direct current motor (2), a mechanical reducer (3), an electrical energy accumulator (7), a first electronic control circuit (6) that governs said direct current motor (2), said mechanical reducer (3) and said accumulator (7), at least one outlet shaft, and at least one external connection cable
**characterised in that**
the self-governed reducer motors (1) are connected in parallel and one of the self-govemed reducer motors (1) is linked to a central box (14) said central box (14) comprising an electronic control circuit (12) that controls all the self-governed reducer motors (1); said electronic control circuit (12) comprises a series of sensors (13) for ambient control, depending on the ambient measures, the electronic control circuit (12) will act on the corresponding self-governed reducer motors (1) sending the appropriate orders to them.

2. SYSTEM FOR THE DRIVING OF MECHANICAL ELEMENTS, according to claim 1, **characterised in that** the central box (14) is provided with an electricity power supply.

3. SYSTEM FOR THE DRIVING OF MECHANICAL ELEMENTS, according to claim 1, **characterised in that** the central box (14) is supplied from a number of batteries.

## Patentansprüche

1. System für den Antrieb mechanischer Elemente, das vorzugsweise zur Installation in Gewächshäusern, auf Bauernhöfen und Ähnlichem bestimmt ist, mit dem Ziel, deren innere Ventilation auf der Grundlage der Umgebungsbedingungen automatisch einstellen zu können, enthaltend mehrere selbstgeregelte Getriebemotoren (1), die jeweils einen Gleichstrommotor (2), ein mechanisches Untersetzungsgetriebe (3), einen elektrischen Energiesammler (7), eine erste elektronische Steuerschaltung (6), die den Gleichstrommotor (2), das mechanische Untersetzungsgetriebe (3) und den Sammler (7) regelt, wenigstens eine Abtriebswelle und wenigsten ein äußeres Anschlusskabel enthalten, **dadurch gekennzeichnet, dass**
die selbstgeregelten Getriebemotoren (1) parallel miteinander verbunden sind und einer der selbstgeregelten Getriebemotoren (1) mit einem zentralen Kasten (14) verbunden ist, der eine elektrische Steuerschaltung (12) enthält, die alle selbstgeregelten Getriebemotoren (1) steuert, die elektronische Steuerschaltung (12) eine Serie Sensoren (13) für die Umgebungssteuerung in Abhängigkeit von den Umgebungsmesswerten enthält, die elektronische Steuerschaltung (7) auf die entsprechenden selbstgeregelten Getriebemotoren (1) einwirkt, indem sie geeignete Befehle an sie sendet.

2. System für den Antrieb mechanischer Elemente nach Anspruch 1, **dadurch gekennzeichnet, dass** der zentrale Kasten (14) mit einer elektrischen Stromversorgung versehen ist.

3. System für den Antrieb mechanischer Elemente nach Anspruch 1, **dadurch gekennzeichnet, dass** der zentrale Kasten (14) von mehreren Batterien versorgt ist.

## Revendications

1. Système pour l'entraînement d'éléments mécaniques, destinés de préférence à être installés dans des serres, fermes et similaires, dans le but de pouvoir étalonner automatiquement leur ventilation interne sur la base des conditions ambiantes, lequel système comprend une pluralité de motoréducteurs autonomes (1), chaque motoréducteur autonome (1) comprenant un moteur à courant continu (2), un réducteur mécanique (3), un accumulateur d'énergie électrique (7), un premier circuit de commande électronique (6) qui commande ledit moteur à courant continu (2), ledit réducteur mécanique (3) et ledit accumulateur (7), au moins un arbre de sortie, et au moins un câble de raccordement externe
**caractérisé en ce que**
les motoréducteurs autonomes (1) sont reliés en parallèle et un des motoréducteurs autonomes (1) est relié à un boîtier central (14), ledit boîtier central (14) comprenant un circuit de commande électronique (12) qui commande tous les motoréducteurs autonomes (1) ; ledit circuit de commande électronique (12) comprend une série de capteurs (13) pour commande ambiante, en fonction des mesures ambiantes, le circuit de commande électronique (12) agira sur les motoréducteurs autonomes (1) correspondants en leur envoyant les ordres appropriés.

2. Système pour l'entraînement d'éléments mécaniques selon la revendication 1, **caractérisé en ce que** le boîtier central (14) est pourvu d'une alimentation électrique.

3. Système pour l'entraînement d'éléments mécaniques selon la revendication 1, **caractérisé en ce que** le boîtier central (14) est alimenté par un certain nombre de batteries.
